# EUROPEAN PATENT APPLICATION

(11) **EP 4 079 995 A1**
(43) Date of publication of application: **26.10.2022**
(21) Application number: 20903688.8
(22) Date of filing: 15.12.2020
(51) Int. Cl.: E04H 9/14

(54) **FLOOD-RESISTANT FACILITY EQUIPPED WITH FLOOD-RESISTANT BARRIER**

(30) Priority: 20.12.2019 JP 2019230124; 05.01.2020 JP 2020000044
(71) Applicant: Kamei, Masamichi, Tokyo 153-0062 (JP)
(72) Inventor: Kamei, Masamichi, Tokyo 153-0062 (JP)
(74) Representative: TBK
(86) International application number: PCT/JP2020/046767
(87) International publication number: WO 2021/125172

(57) **Abstract**

A flood-resistant facility of the present invention is obtained by constructing a flood-resistant barrier 2 in a manner surrounding a plurality of buildings 1. The area surrounded by the flood-resistant barrier 2 is such that an embankment E having a height of approximately 1.5m, for instance, is created, and the height of the upper end part of the flood-resistant barrier 2 constructed on the embankment E is at least the height of the flood depth of that region. By closing off an opening in the flood-resistant barrier 2 during flooding, an isolated space 3 is formed between the buildings 1 and the flood-resistant barrier 2, and damage is prevented from occurring within the space. A portion of the wall of one or more of the buildings 1 is made to protrude to outside of the area surrounded by the flood-resistant barrier 2, and the wall surface of the protruding section is configured to be a wall-resistant wall 1W which has watertightness and is continuous with the flood-resistant barrier 2, thereby making it possible to suppress costs of sections of the flood-resistant barrier 2 main body, while increasing the strength as a whole, and also simplifying design. Furthermore, the height of the flood-resistant barrier 2 main body can be suppressed in an amount equivalent to the height of the embankment E, which also lowers the water pressure or wave pressure received by the flood-resistant barrier 2 during flooding, thus simplifying the safety design of the flood-resistant barrier 2.

## Description

### TECHNICAL FIELD

This invention relates to a flood-resistant facility equipped with a flood-resistant barrier, with which long-term refuge life inside a building is enabled, while the building and the residents are prevented from flood disasters due to floods and/or storm surges. It is to be noted that examples of buildings as targets for application mainly include a multiple dwelling housing, a hotel, an office building, a hospital and a factory.

### BACKGROUND ARTS

Owing to the unusual weather in recent years, there have been frequent floodings beyond an expected level due to floods and/or storm surges. In regards to countermeasures against such floodings due to floods and/or storm surges, the inventions as disclosed in the following patent documents 1 to 5, for instance, are known as conventional arts for preventing water from entering the interior of a building and the like.

The patent document 1 discloses a water cutoff device which comprises a water cutoff plate with a predetermined area, a box body for the water cutoff plate to be housed therein or placed thereon, a lower locking member and an upper locking member, wherein when the water cutoff plate housed in the box body is placed under the ground, a water cutoff plate surface is nearly level with a ground surface, and wherein the water cutoff plate is manually raised and locked with the upper and lower locking members, thereby preventing intrusion of floodwater resulting from overflow of rainwater, river water or seawater.

The patent document 2 discloses an emergency-use waterproof retaining wall, wherein a bed plate and a cover plate for protecting a U-shaped groove in the bed plate are buried in the ground without hindrance to entrance to or exit from a structure such as a building, and wherein in the occurrence of flooding, a sheathing board is inserted into the U-shaped groove after removal of the cover plate and is followed by connection and fixing to the bed plate through a reinforcing material to assemble an individual waterproof retaining wall unit, thereafter, the assembled waterproof retaining wall units are connected together, and each clearance between the units is sealed with a joint plate to build a retaining wall around the structure such as to surround the structure with walls, thereby preventing water from entering the interior of the retaining wall.

As one flooding prevention device which can be speedily assembled on a passage such as a doorway of a building in the case of emergencies such as heavy rainfalls and floods and is excellent in a function of preventing water from entering the interior of the building, the patent document 3 discloses a flooding prevention device which is for preventing water from entering the interior of a building and comprises support materials provided on both side wall faces of a building passage, a water cutoff panel for blocking the building passage by joining both side ends of the water cutoff panel to the support materials by pressure over the whole panel length, a panel receiving beam member installed on a passage floor surface between the support material lower ends to receive the lower end of the water cutoff panel, a first pressure joining means for joining the lower end of the water cutoff panel onto the panel receiving beam member by pressure and a second pressure joining means for joining the panel receiving beam member onto the passage floor surface by pressure.

The patent document 4 discloses a waterproof shutter which is installed in a place such as building entrance, the waterproof shutter being made to be watertight for preventing water from entering the interior of the building from the outside in the case of emergencies.

As one water cutoff plate for preventing water from entering a building or a construction or the like, the patent document 5 discloses a water cutoff structure which is configured such that both right and left ends of a water cutoff panel are fitted in a fixing frame through a gasket, and it is stated in this document that this water cutoff structure can prevent water from entering through fittings by installation of the water cutoff panel at the inside or outside of the fittings, and can also prevent flood damages by installation of the water cutoff panel at a flooding prevention wall gate.

However, the inventions disclosed in the patent documents 1 to 5 are to make it possible to cope with relatively small-scale floodings mainly for small-sized buildings, but are not aimed at effectively coping with large-scale floodings that are frequently occurring in recent years.

In view of the above circumstances, the present inventor of this application invented a flood-resistant building equipped with a flood-resistant barrier as disclosed in a patent document 6 below.

This flood-resistant building equipped with a flood-resistant barrier is mainly configured such that in the periphery of a building such as a multiple dwelling housing, a hotel, an office building, a hospital and a factory, a flood-resistant barrier made to be watertight is constructed in a spacing relationship to the building so as to surround nearly the entire periphery of the building except openings configured to be an entrance and exit for use at normal times, the flood-resistant barrier being made to be at least equal in height to an estimated flood depth in an application target region, as well as to have durability enough to be resistant to water pressure of floodwater of at least the estimated flood depth, and the opening sections of the flood-resistant barrier are provided with an opening sealing means for water-tightly closing off the openings in the opening sections during flooding.

According to the above flood-resistant building, in the occurrence of flooding, the openings in the flood-resistant barrier are closed off by the opening sealing means during flooding so that an isolated space is formed between the periphery of the building and the flood-resistant barrier, resulting in no danger of intrusion of water through the entrance and/or windows of the building, on the grounds that the interior of the flood-resistant barrier is in a state of being inundated at most up to a water level that is equal to or smaller than an amount of rainfall even when an outer area of the flood-resistant barrier is flooded up to a water level that is equal to the estimated flood depth. Besides, even in applications to the existing building, the opening sections of the building itself can directly cope with flooding without the need for special repairing works, and the damages to the building by flooding can be prevented or kept to a minimum.

Even when difficulties arise in traffics to/from the outside in situation where the outer area of the flood-resistant barrier is flooded up to the water level that is equal to or close to the estimated flood depth, the interior of the flood-resistant barrier is kept in a tranquil condition, resulting in that an impact on the functions of the building itself is reduced. Besides, even when the surrounding areas of the building remain flooded for a long period of time above a week, for instance, safety of the building itself is maintained, and therefore, installation of emergency-use equipment such as emergency-use generator, emergency-use water receiving tank and emergency-use septic tank inside the flood-resistant barrier beforehand enables the safe and long-term refuge life during flooding.

The flood-resistant building when applied to a facility for public use can be utilized also as a place of refuge to accept the local residents having difficulties in refuge across a wide area.

As to the flood-resistant barrier, installation of a large-sized window made to be watertight enough to be resistant to the water pressure or decoration of the water-resistant barrier makes it possible to secure visibility from the interior of the flood-resistant barrier so as to prevent the residents on the first and the second floors of the building from feeling blocked psychologically. Further, the flood-resistant barrier does not impair the surrounding scenery of the flood-resistant barrier, but would rather present a beautiful sight for enhancement of a value of building property from the viewpoint of design.

Installation of the emergency-use equipment such as the emergency-use water receiving tank, the emergency-use generator and the emergency-use septic tank in a place such as an underground section, a site or a rooftop of the building enables long-term refuge life, because local infrastructure inside the building is secured even in situation where the supply of essential services from without has absolutely cut off.

In association with the above flood-resistant barrier, the present inventor of this application further invented a multiplex water cutoff wall as disclosed in a patent document 7 below.

This multiplex water cutoff wall mainly comprises a plurality of water cutoff walls disposed in a double or at least triple wall arrangement with a gap in the wall thickness direction, and a drainage means for draining water having infiltrated between the water cutoff walls to the outside, wherein infiltration of water into the interior of the multiplex water cutoff wall can be controlled with a simple structure.

Namely, with respect to the first water cutoff wall, a certain degree of water leakage is permitted under water pressure applied during flooding, and the water having leaked into an inter-wall space in the second or the third and the following water cutoff walls is drained with the drainage means at an early stage, resulting in a reduction in burden on the second or the third and the following water cutoff walls, thus enabling water infiltration into the interior of the multiplex water cutoff wall to be controlled.

Accordingly, the multiplex water cutoff wall can be made to have a simple structure because of its smaller burden on each of the water cutoff walls in a multiplex wall arrangement and on the water cutoff material and/or a pressing means, as compared with a conventional water cutoff wall configured such as to attempt to enhance water cutoff performance as much as possible only with a water cutoff wall in a single wall arrangement.

Further, as one integral-type mound which is for mitigation of damages due to tsunami by installation of this mound in a region where tsunami or like disasters are expected to occur, and on which a tower structure is made constructable as an upland refuge place which allows the local residents to escape, a patent document 8 below discloses a structure in which mounds created in a truncated cone shape by embankment are connected to each other by embankment and/or land creation, and consequently, a tower structure is constructed on the resultant mound section.

A patent document 9 below states that a concrete framestructured shelter for refuge in large area is constructed inside a breakwater, and planting is applied to a gentle slope section of the breakwater.

A patent document 10 below states that, for the purpose of prevention of disasters on the coast or in the water area due to exertion of a great wave dissipating force against an incoming wave caused by tsunami or typhoon, a large number of piles and wire nettings or metallic baskets are installed on the front of a revetment along a coastline to reduce dissipating waves and reflecting waves.

### PRIOR ART DOCUMENTS

### PATENT DOCUMENTS

Patent document 1: Japanese Patent Publication No. 4435512
Patent document 2: Japanese Utility Model Registration Publication No. 3113333
Patent document 3: Japanese Unexamined Patent Application Publication No. 2018-096114
Patent document 4: Japanese Unexamined Patent Application Publication No. 2016-138372
Patent document 5: Japanese Unexamined Patent Application Publication No. 2002-242481
Patent document 6: Japanese Patent Publication No. 6501961
Patent document 7: Japanese Patent Publication No. 6516946
Patent document 8: Japanese Patent Publication No. 6497641
Patent document 9: Japanese Patent Publication No. 6541012
Patent document 10: Japanese Unexamined Patent Application Publication No. 2009-114636

### SUMMARY OF THE INVENTION

### PROBLEMS TO BE SOLVED BY THE INVENTION

The invention as disclosed in the above patent document 6 involves a problem that when the flood-resistant barrier made to be at least equal in height to 5m is constructed in the periphery of the building in accordance with the estimated flood depth, the water pressure or wave pressure received by the flood-resistant barrier will get extremely larger, resulting in not only the need of high construction cost for the flood-resistant barrier but also difficulty in flood-resistant barrier design itself required for achievement of strength for safety and of stability.

The present invention is mainly aimed at solving the problem with the invention disclosed in the above patent document 6 and is to provide a flood-resistant facility obtained by constructing a flood-resistant barrier on an embankment that is created so as to be not excessive in an area for construction of a building as the target of application, thereby suppressing the construction cost of the flood-resistant barrier capable of being resistant to floodwater of an estimated flood depth and to water pressure, while suppressing the height of the flood-resistant barrier itself, and ensuring a high safety.

According to the present invention, a flood-resistant facility equipped with a flood-resistant barrier is characterized in that, in the periphery of one or more buildings, a flood-resistant barrier made to be watertight is constructed so as to surround nearly the entire periphery of the buildings except openings configured to be an entrance and exit for use at normal times, the flood-resistant barrier being configured such as to have an upper end part that is at least equal in height to an estimated flood depth in an application target region, as well as to have durability enough to be resistant to the water pressure of floodwater of at least the estimated flood depth, and the opening sections of the flood-resistant barrier are provided with an opening sealing means for water-tightly closing off the openings in the opening sections during flooding, wherein an embankment of at least a predetermined height is created in an area surrounded by the flood-resistant barrier, and the height of the upper end part of the flood-resistant barrier constructed on the embankment is set to be at least equal to the estimated flood depth in the application target region, wherein in a predetermined area outside the flood-resistant barrier, a sloping embankment part is created as a transition section that gradually increases in height from the surface of a point of source or origin toward the flood-resistant barrier, and wherein a portion of the wall of at least one or more of the buildings is made to protrude to outside of the area surrounded by the flood-resistant barrier, and the wall surface of the protruding section extending to outside of the area surrounded by the flood-resistant barrier is configured to be a water-resistant wall which has watertightness and is continuous with the flood-resistant barrier.

It is to be noted that examples of the buildings stated herein include a multiple dwelling housing, a hotel, an office building, a hospital and a factory, for instance, and also that examples of construction of the flood-resistant barrier include construction in not only a shape that surrounds a single building but also a shape that surrounds the same type or different types of buildings.

A predetermined spacing is supposed to be provided between the buildings and the flood-resistant barrier in general, whereas according to the present invention, because of the configuration in which the portion of the building wall is made to protrude to outside of the area surrounded by the water-resistant barrier so that the wall surface of the protruding section is configured to be the water-resistant wall which has watertightness and is continuous with the flood-resistant wall, it is thus possible to, in regards to the aspect of strength, obtain a strength capable of fully withstanding great water pressure actions or collisions of drifting articles, thus simplifying the design, while suppressing the construction cost of flood-resistant barrier sections.

The embankment is not specified in height in particular, but may be 0.5 to 2m in height, or otherwise, 3.0m or more in height depending on the conditions.

It is to be noted that, as to a foundation part for the building to be constructed or to its periphery, the embankment is not partly necessary in consideration of the relation to building foundation.

It is to be noted also that the embankment is created basically for the purpose of suppression of the height of the main body of the flood-resistant barrier, and accordingly, no creation of the embankment in an interior section distant from the flood-resistant barrier at a certain distance is optionally selectable. For instance, an artificial pond or a park may be created in that section.

As to a width of the transition section, in applications where a slope gradient is made constant in consideration of incoming and outgoing vehicles into/from the opening section, more specifically, where a longitudinal slope gradient is assumed to be 12%, for instance, the transition section width may be as large as 4.2m when assuming an embankment height to be 0.5m, and otherwise, 16.7m when assuming the embankment height to be 2.0m. In which case, however, the longitudinal gradient of an incoming/outgoing route itself can be made smaller if the incoming/outgoing route is formed in the shape which makes a detour in the transition section, instead of the shape which crosses the transition section at right angles.

It is to be noted that the embankment in the section where the portion of the building wall is made to protrude to outside of the area surrounded by the flood-resistant barrier can be partly omitted. Further, when an entrance having a water cutoff property is installed in the protruding section of the building on the outside of the flood-resistant barrier, it may be possible also to utilize this entrance as a passage leading to an interior space formed inside the flood-resistant barrier.

Under the circumstances that storm surge damages caused by recent typhoons have become a serious problem, it has been pointed out that as for Koto, Katsushika, Edogawa, Adachi, Arakawa and Sumida Wards in Tokyo, Japan, for instance, there are several areas where the occurrence of flooding up to a water level of 3 to 5m would be estimated, and also that it might take ten days to about two weeks to resume the supply of electricity, gas and water/sewerage services.

In this case, horizontal refuge which is one refuge action of taking refuge beforehand to a place out of a flooded area has been heretofore recommended, instead of vertical refuge which is another refuge action of taking refuge to upper stories of the same building. However, in response to the above, there have been also a lot of opposing opinions stating that it would be difficult to seek safety without taking the vertical refuge.

For instance, in March, 2013, the Ministry of Land, Infrastructure, Transport and Tourism in Japan revised "Guideline for Flood Hazard Mapping", and in this revised guideline, the flood depth ranks are shown in a simplified form such that the number of flood depth ranks is reduced from five as having been established in conventional hazard maps in accordance with rough estimate of flooding to three, that is, a flood depth of at least 3.0m (or inundation above a second floor), that of 0.5 to less than 3.0m (or inundation above a first floor) and that of less than 0.5m, (or inundation below the first floor). For the local residents in an area where the occurrence of flooding up to the water level of 0.5 to 3.0m would be estimated, this guideline gives advice such as "Be relaxed to take refuge by going upstairs in one's own house, when it is too late to take refuge to the outside of the house".

The present invention is to enable the vertical refuge and is based on the concept in which in the periphery of the buildings, the flood-resistant barrier of 3 to 6m or more in height, inclusive of the embankment height, for instance, is firstly constructed. According to the present invention, the openings in the flood-resistant barrier are closed off by the opening sealing means during flooding so that an isolated space is formed between the periphery of the buildings and the flood-resistant barrier, resulting in no danger of intrusion of water through the entrance and/or windows of the buildings, on the grounds that the interior of the flood-resistant barrier is in a state of being inundated at most up to a water level that is equal to or smaller than an amount of rainfall even when an outer area of the flood-resistant barrier is flooded up to a water level that is equal to the estimated flood depth. Besides, even in applications to the existing building, the opening sections of the building itself can directly cope with flooding without the need for spatial repairing works, and the damages to the building by flooding can be prevented or kept to a minimum.

Even when difficulties arise in traffics to/from the outside in situation where the outer area of the flood-resistant barrier is flooded up to the water level that is equal to or close to the estimated flood depth, the interior of the flood-resistant barrier is kept in a tranquil condition, resulting in that an impact on the functions of the building itself is reduced. Besides, even when the surrounding areas of the building remain flooded for a long period of time above a week, for instance, safety of the building itself is maintained.

The flood-resistant barrier is not specified in material in particular, but may be constructed using a material mainly containing watertight concrete conventionally used for construction of water tanks, pools and basements, for instance. Alternatively, the flood-resistant barrier may be a metal or reinforced plastic-made flood-resistant barrier.

When precast products are installed in side-by-side arrangement to construct the flood-resistant barrier, a water cutoff material is interposed between the precast products to secure the watertightness of the whole flood-resistant barrier. Further, for the purpose of resisting the dynamic and static water pressures received during flooding, a buttress or a stay is additionally installed, as needed. Incidentally, it is preferable to embed a lower end of the flood-resistant barrier in the ground, and also to take some measures for preventing generation of underground flow.

As the opening sealing means, use can be made of a structure having supports installed on both sides of the opening and provided with guide grooves, a plurality of vertically-extending water cutoff panels configured such that the opposite ends of each water cutoff panel are fitted into the support guide grooves, and a water cutoff material interposed between the guide groove and the water cutoff panel and between the water cutoff panels, for instance.

More preferably, a multiplex water cutoff wall disclosed in Japanese Patent Publication No. 6516946 stated as the patent document 7 can be used as the opening sealing means. Namely, as the opening sealing means, use can be made of the multiplex water cutoff wall which comprises a plurality of water cutoff walls disposed in a double or at least triple wall arrangement with a gap in the wall thickness direction and a drainage means for draining water having infiltrated between the water cutoff walls to the outside.

This multiplex water cutoff wall takes a configuration in which the water cutoff walls are disposed in a multiplex wall arrangement, and water having infiltrated between the water cutoff walls in the multiplex wall arrangement is drained with the drainage means such as a pump, thus enabling infiltration of water into the interior of the multiplex water cutoff wall to be controlled with a simple structure.

Namely, with respect to the first water cutoff wall, a certain degree of water leakage is permitted under water pressure applied during flooding, and the water having leaked into the inter-wall space in the second or the third and the following water cutoff walls is drained with the drainage means at an early stage, resulting in a reduction in burden on the second or the third and the following water cutoff walls, thus enabling infiltration of water into the interior of the multiplex water cutoff wall to be controlled.

A drainage pump is commonly used as the drainage means for draining the water having infiltrated between the water cutoff walls in the multiplex wall arrangement to the outside, in which case, however, it is necessary to use a certain type of drainage pump applicable to drainage of even muddy water and/or seawater in accordance with conditions of installation location, for the reason that there may occur intrusion of muddy water during flooding and/or intrusion of seawater during tsunami or flooding in places close to the seashore.

The drainage means such as the drainage pump is not specified in installation position in particular, but may be installed in any position easy to operate. When a submerged pump is installed between the water cutoff walls in the multiplex wall arrangement, use can be also made of an automatic operation-type submerged pump which automatically starts operation at a time when the water level exceeds a definite limit.

As to the transition section in the flood-resistant facility equipped with the flood-resistant barrier of the present invention, planting may be applied to the partial or nearly entire area of the transition section. Thus, the transition section to which planting is applied can be expected not only to be effective in scenery and environment aspects but also to play some role in prevention of the collision of drifting articles against the flood-resistant barrier during an incoming tsunami, for instance.

Further, in some regions that are prone to tsunami disasters, water dissipating blocks or wave dissipating structures may be installed on the partial or nearly entire periphery of the flood-resistant barrier. It is known that such strength as being about three times as large as static pressure is required to withstand wave power caused by tsunami, in which case, however, installation of the wave dissipating blocks or wave dissipating structures in the transition section enables an effect of dispersing the tsunami wave power to a certain extent to be expected.

### EFFECTS OF THE INVENTION

With the flood-resistant facility equipped with the flood-resistant barrier of the present invention, while the basic effects on flood damages are similar to those of the flood-resistant building equipped with the flood-resistant barrier as disclosed in the Japanese Patent Publication No. 6501961 stated as the patent document 6, it would be appreciated that according to the present invention, because of the configuration in which the embankment of at least the predetermined height is created in the area surrounded by the flood-resistant barrier, and the flood-resistant barrier is constructed on the embankment, it is thus possible to increase the substantial height of the flood-resistant barrier while suppressing the height of the main body of the flood-resistant barrier, thus enabling a significant reduction in construction cost of the main body of the flood-resistant barrier.

Further, because of the significant reduction in water pressure or wave pressure received by the main body of the flood-resistant barrier, it is thus advantageous in the aspect of safety design against the water pressure and/or wave power received during flooding.

Because of the effects of enabling suppression of the height of the flood-resistant barrier and simplification of design as described the above, the flood-resistant barrier is potentially flexible such as to increase the height of the flood-resistant barrier in an additional placement manner or to reinforce the flood-resistant barrier, when the flood-resistant barrier requires higher strength and greater height due to weather fluctuations or environmental changes and/or in conformity with laws after amendments.

When the flood-resistant barrier is constructed in combination with creation of the embankment, no wasteful excavating work is required even for the flood-resistant barrier which should be embedded by a large depth. Further, during execution of construction of the building inside the flood-resistant barrier, the construction waste soil resulting from execution of excavation of the building foundation and/or basement part can be diverted to creation of the embankment, thereby leading to the reduction in total construction cost as well.

Because of the configuration in which the portion of the wall of one or more of the buildings is made to protrude to outside of the area surrounded by the flood-resistant barrier, the need for creation of the embankment in that portion can be eliminated, and besides, the length of extension of the flood-resistant barrier is made smaller, enabling the reduction in construction cost of the flood-resistant barrier itself.

Meanwhile, from the point of view of effective unitization of the site, the degree of freedom of design is increased because of arrangement of the building portion up to the outside of the flood-resistant barrier.

Further, the space of the transition section outside the flood-resistant barrier is enlarged, improving the effective utilization of the transition section, together with the environmental development thereof, and also enabling the reduction in gradient of the transition section, provided that the embankments are of the same height. When the transition sections are the same in gradient, the height of the embankment can be increased by a larger width portion of the transition section, enabling the reduction in height of the flood-resistant barrier.

As to the transition section in the periphery of the flood-resistant barrier, planting can be applied thereto for countermeasures against flooding, in addition to for improvement of scenery, or alternatively, the wave dissipating blocks can be installed thereat as needed.

Moreover, in some regions that are less predicted to have flood disasters, the transition section can be effectively utilized such as to install various constructions in the transition section or locate temporary stores thereat.

### BRIEF DESCRIPTION OF THE DRAWINGS

[FIG. 1] FIG. 1 is a perspective view conceptionally showing a flood-resistant facility equipped with a flood-resistant barrier according to the present invention.
[FIG. 2] FIG. 2 is a vertical cross-sectional view conceptionally showing the relation between the flood-resistant barrier and an embankment according to the present invention.
[FIG. 3] FIG. 3 is a plan view conceptionally showing one embodiment of the flood-resistant facility equipped with the flood-resistant barrier according to the present invention.
[FIG. 4] FIG. 4 is a plan view conceptionally showing another embodiment of the flood-resistant facility equipped with the flood-resistant barrier according to the present invention.
[FIG. 5] FIG. 5 is a vertical cross-sectional view showing one embodiment as the specific configuration of an interior section of the flood-resistant barrier in the flood-resistant facility according to the present invention.
[FIG. 6] FIG. 6 is a vertical cross-sectional view showing another embodiment as the specific configuration of the interior section of the flood-resistant barrier in the flood-resistant facility according to the present invention.
[FIG. 7] FIG. 7 is a horizontal cross-sectional view showing one embodiment of a multiplex water cutoff wall for use in an opening section.
[FIG. 8] FIG. 8 is a vertical cross-sectional view corresponding to the embodiment shown in FIG. 7.
[FIG. 9] FIG. 9 is a horizontal cross-sectional view showing another embodiment of the multiplex water cutoff wall for use in the opening section.
[FIG. 10] FIG. 10 is a vertical cross-sectional view corresponding to the embodiment shown in FIG. 9.
[FIG. 11] FIG. 11 is a view showing the principle of the multiplex water cutoff wall.

### MODE FOR EMBODYING THE INVENTION

Hereinafter will be described the present invention with reference to the attached drawings.

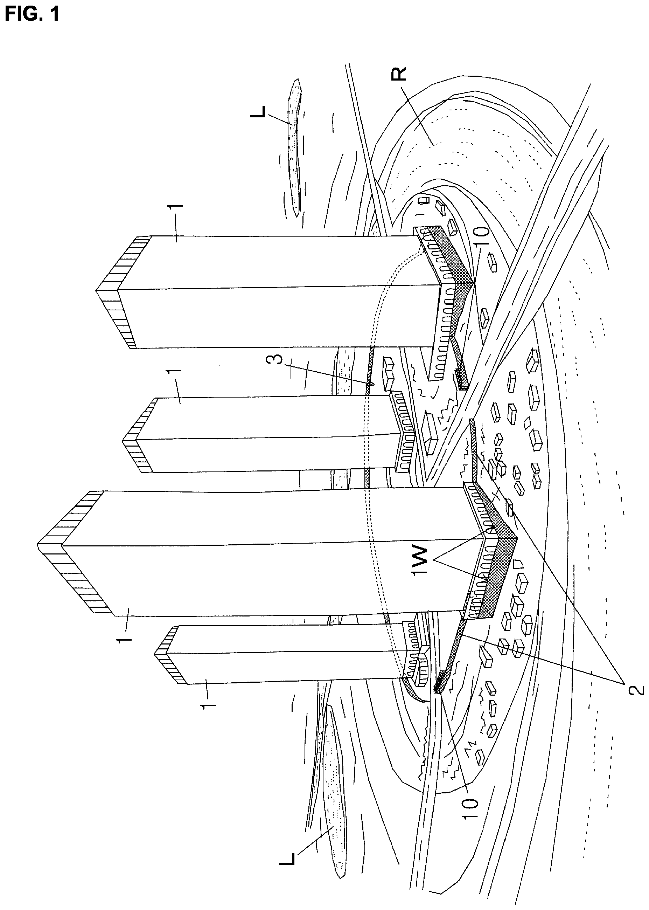

FIG. 1 is a perspective view conceptionally showing a flood-resistant facility equipped with a flood-resistant barrier according to the present invention.

According to the present invention, in the periphery of various buildings 1 and/or structures constructed within a predetermined region, a flood-resistant barrier 2 made to be watertight and at least equal in height to an estimated flood depth during flooding in that region is constructed so as to surround the entire periphery of the buildings 1.

In the occurrence of flooding, openings 9 of the flood-resistant barrier 2 are closed off by an opening sealing means such as a multiplex water cutoff wall 10 detailed below so that an isolated space 3 is formed between the periphery of the buildings 1 and the flood-resistant barrier 2, thereby preventing damages to the buildings 1.

An embankment E of at least a predetermined height is created in an area surrounded by the flood-resistant barrier 2, wherein the height of an upper end part of the flood-resistant barrier 2 constructed on the embankment E is set so as to be at least equal to an estimated flood depth in an application target region.

Further, as to some of the buildings, a portion of the wall of some of buildings 1 is made to protrude to outside of the area surrounded by the flood-resistant barrier 2, and the wall surface of the protruding section is configured to be a water-resistant wall 1W which has watertightness and is continuous with the flood-resistant barrier 2.

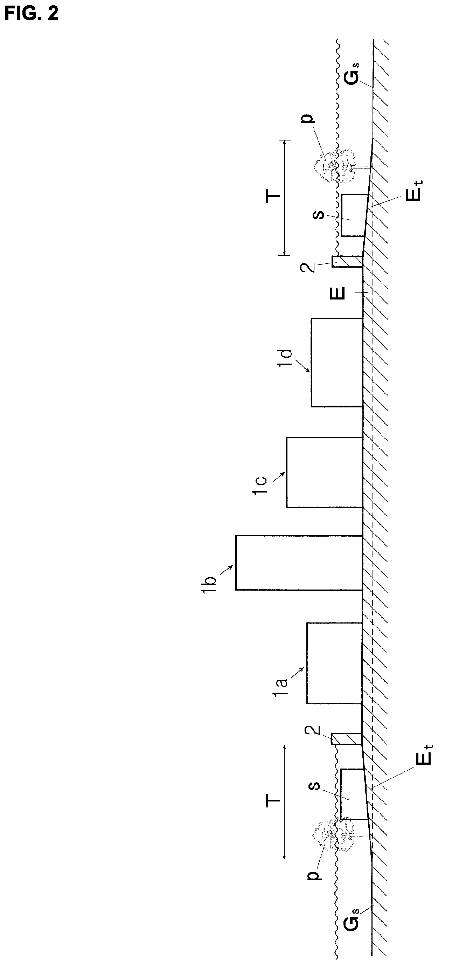

FIG. 2 conceptionally shows the relation between the flood-resistant barrier and the embankment E according to the present invention.

Referring to this embodiment, in the periphery of a group of buildings including a multiple dwelling housing 1a, an office building 1b, a hospital 1c and a storehouse 1d which are all constructed within the predetermined region, the flood-resistant barrier 2 made to be watertight and at least equal in height to the estimated flood depth during flooding in that region is constructed so as to surround the entire periphery of the buildings. And, the openings of the flood-resistant barrier 2 are closed off by the opening sealing means during flooding so that the isolated space 3 is formed between the periphery of the buildings and the flood-resistant barrier 2, thereby preventing damages to the buildings.

In the area surrounded by the flood-resistant barrier 2, the embankment E of at least the predetermined height is created, wherein the height of the upper end part of the flood-resistant barrier 2 constructed on the embankment E is set so as to be at least equal to the estimated flood depth in the target region.

A sloping embankment part Et is created in a predetermined area outside the flood-resistant barrier 2, the sloping embankment part being configured to be a transition section T which gradually increases in height from the surface of a point of source or origin Gₛ toward the flood-resistant barrier 2.

The embankment E is made to be about 0.5 to 3.0m in height, specifically, about 1.5m in height, for instance, depending on the conditions of the target region, and the height of the flood-resistant barrier-2 main body can be suppressed in an amount equivalent to the embankment height. Accordingly, the water pressure or wave pressure received by the flood-resistant barrier 2 during flooding is lowered, thus simplifying the safety design of the flood-resistant barrier 2.

It is to be noted that the embankment E is supposed to be basically created inside the flood-resistant barrier 2 as well, in which case, however, as to the foundation part for the buildings to be constructed or to its periphery, the embankment is not partly necessary in consideration of the relation to building foundation. It is to be noted also that no creation of the embankment in an interior section distant from the flood-resistant barrier 2 at a certain distance is also optionally selectable.

As to a width of the transition section T, in applications where a slope gradient is made constant in consideration of incoming and outgoing vehicles into/from the opening section, more specifically, where a longitudinal slope gradient is assumed to be 12%, for instance, the transition section width may be as large as 12.5m when assuming the embankment height to be 1.5m.

It is to be noted that in this embodiment, the flood-resistant barrier 2 is constructed so as to surround the plurality of buildings, whereas there may be cases where the flood-resistant barrier 2 is constructed so as to surround the single building as well.

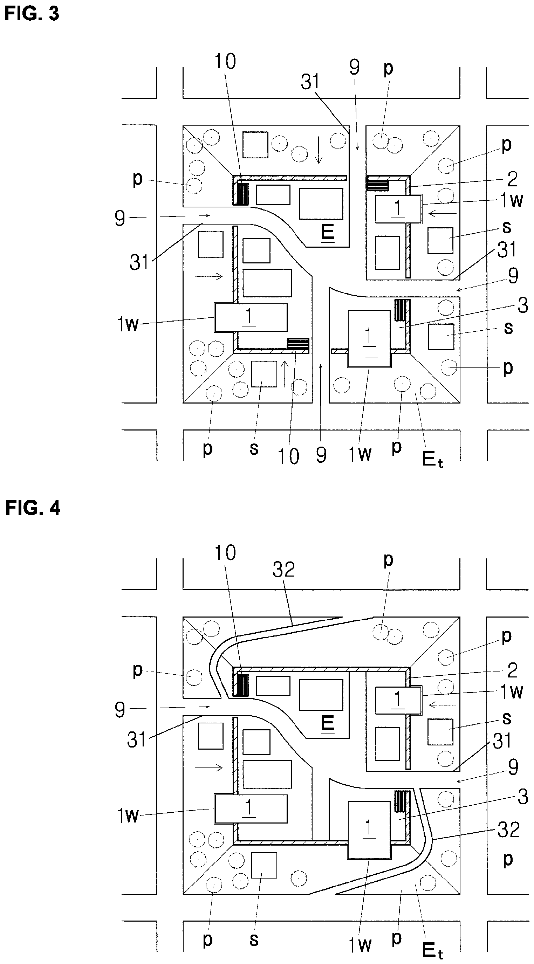

FIG. 3 is a plan view conceptionally showing one embodiment of the flood-resistant facility equipped with the flood-resistant barrier according to the present invention.

Referring to this embodiment, the embankment E and the embankment part Et configured to be the transition section are created on the interior side from the boundary in the site of the target region surrounded by roads, and the flood-resistant barrier 2 is constructed so as to surround the plurality of buildings 1.

Each of the openings 9 (in four places in the illustrated embodiment) of the flood-resistant barrier 2 is provided with an openable water cutoff wall 10 so as to close off the openings 9 in the occurrence of flooding.

Further, as to some of the buildings 1, a portion of the wall of some of the buildings 1 is made to protrude to outside of the area surrounded by the flood-resistant barrier 2.

The protruding section obtained by protrusion of the portion of the wall of some of the buildings 1 to outside of the flood-resistant barrier 2 is subjected to reinforcement so as to function as the water-resistant wall 1W having watertightness, so that the interior space 3 is kept in a tranquil condition by the water-resistant wall, together with the flood-resistant barrier 2 during flooding.

In this case, the length of extension of the flood-resistant barrier 2 itself is made smaller, enabling the reduction in construction cost of the flood-resistant barrier 2 itself. Meanwhile, from the point of view of the relation to the site, the degree of freedom of the design related to the arrangement of the buildings 1 is not impaired because of the arrangement of the portion of the buildings 1 up to the outside of the flood-resistant barrier 2. Further, the space of the transition section outside the flood-resistant barrier 2 is enlarged, improving the effective utilization of the transition section, together with the environmental development thereof.

Furthermore, in this embodiment, planting p is applied to the transition section outside the flood-resistant barrier 2, and some stores s are located in several places thereof.

FIG. 4 is a plan view conceptionally showing another embodiment of the flood-resistant facility equipped with the flood-resistant barrier according to the present invention.

According to the previously described embodiment shown in FIG. 3., each route leading from a road outside the flood-resistant barrier 2 to the interior of the flood-resistant barrier 2 is designed so as to cross the transition section at right angles, resulting in the need to increase the width of the transition section to a certain extent.

On the other hand, the embodiment shown in FIG. 4 takes a configuration in which, in relation to an incoming/outgoing route into/from the interior of the flood-resistant barrier 2, a detour route 32 that makes a detour around the periphery of the flood-resistant barrier 2 is provided for a main route 31, wherein the longitudinal gradient of the detour route 32 is made smaller even when the width of the transition section is reduced.

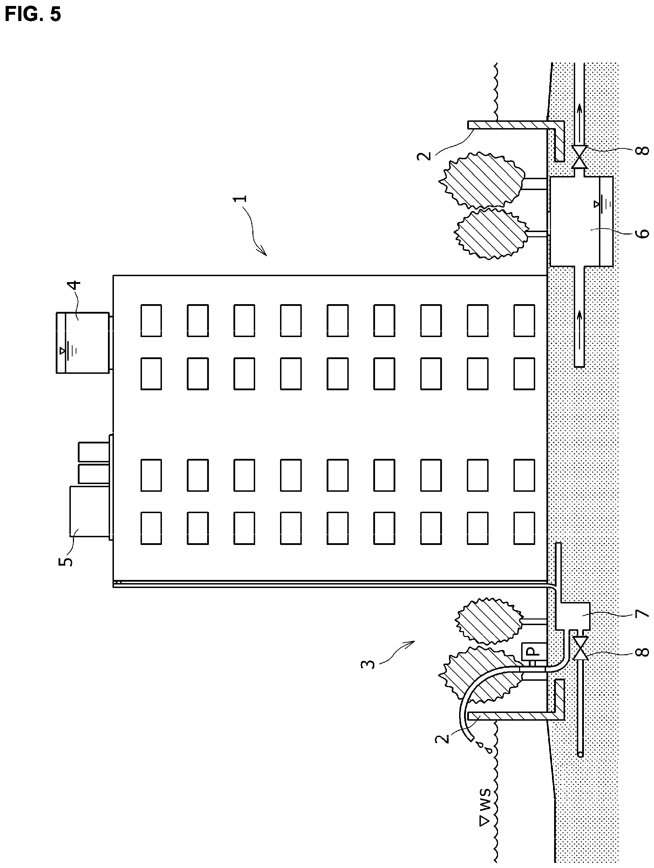

FIG. 5 shows one embodiment as the specific configuration of an interior section of the flood-resistant barrier in the flood-resistant facility. Referring to the embodiment shown in FIG. 5., the building 1 is assumed to be the multiple dwelling house, wherein in the site where the embankment is created, the flood-resistant barrier 2 is constructed so as to surround nearly the entire periphery of the building 1. The periphery of the flood-resistant barrier 2 is configured to be the transition section of a gently sloping embankment.

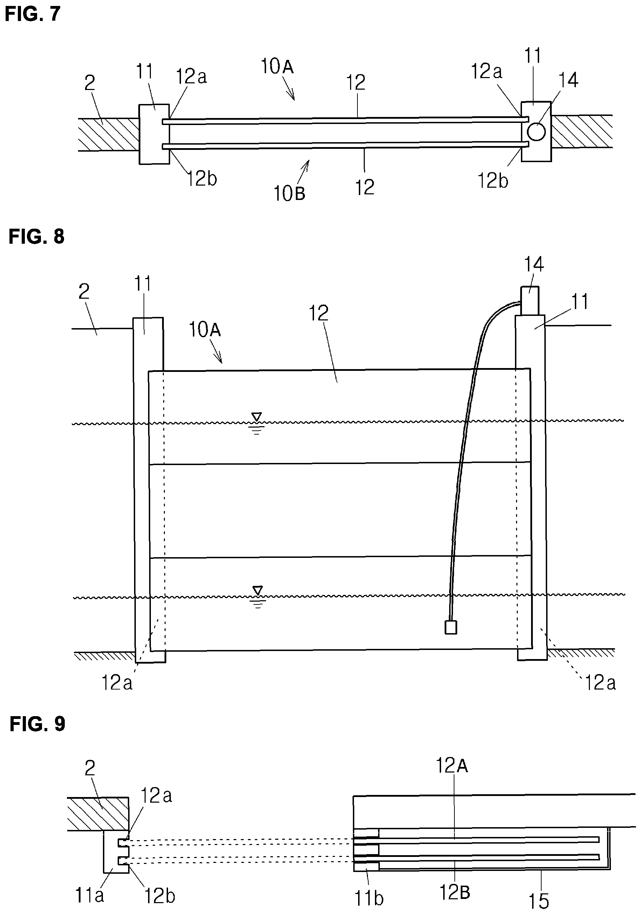

Structurally, in the site surrounding the building 1, the flood-resistant barrier 2 is constructed so as to surround nearly the entire periphery of the building 1, and the sections (not shown) configured to be an entrance and exit for use at normal times such as section connected to an entrance hall, section connected to a parking place and section used as a disposal place of residential wastes and others are provided with an opening sealing means (see FIGS. 7 to 11 described below, for instance) for water-tightly closing off the openings of these sections, wherein when the risk of flooding due to floods or storm surges arises, the openings are closed off by the opening sealing means so that the isolated tranquil space 3 is formed inside the flood-resistant barrier 2.

The flood-resistant barrier 2 is made to be at least equal in height to the estimated flood depth in a region where the building 1 is located, and the height of the flood-resistant barrier 2 can be arbitrarily set to be at least equal to the estimated flood depth in consideration of the securement of safety in the case of unexpected problems, specifically, such as to be at least 2 to about 3m for the estimated flood depth of 2m, at least 4 to about 5m for the estimated flood depth of 4m and at least 5 to about 6m for the estimated flood depth of 5m, for instance.

The flood-resistant barrier 2 should be watertight and can be formed by arranging L-shaped blocks of watertight concrete side by side, followed by interposing a water cutoff material such as packing material between the L-shaped blocks, for instance. Alternatively, the flood-resistant barrier 2 may be a cast-in-place concrete flood-resistant barrier.

The flood-resistant barrier 2 should be of course structured so as to have durability enough to be resistant to the static and dynamic water pressures received during floods or storm surges, and hence, a buttress and/or a stay is additionally installed, as needed.

Further, the flood-resistant barrier should be also structured so as to be capable of coping with generation of underground flows or with backflows in sewage pipes or like problems which would be caused in the occurrence of flooding of a great flood depth. Specifically, the flood-resistant barrier 2 is embedded up to a greater depth of embedment, or alternatively, the foundation part of the flood-resistant barrier 2 is subjected to soil improvement, as needed. Meanwhile, a pipeline leading to the outside is provided with a check valve 8.

The present invention is to enable safe vertical refuge without difficulties, in which case, however, there still exists the need to cope with even situation where the surrounding areas of the building remain flooded for a week or for a long period of time above a week, for instance, on the grounds that traffics to/from the outside by land might be basically shut off in the occurrence of flooding of a great flood depth in the surrounding areas of the building.

For that reason, this embodiment takes a configuration in which an emergency-use water receiving tank 4 and an emergency-use generator 5 are installed on the rooftop of the building 1, separately from a water receiving tank for use at normal times, and besides, an emergency-use septic tank 6 is installed under the ground in the site, thereby enabling the living environment during refuge to be guaranteed for a long period of time ranging from at least a week to about a month, for instance. Further, in the occurrence of an extremely large rainfall due to heavy rain, a rainwater storage tank 7 installed under the ground in the site is applied to suppress water level elevation caused by rainfall inside the flood-resistant barrier 2. The rainwater fallen in a place surrounded by the flood-resistant barrier 2 can be once stored in the rainwater storage tank 7, followed by being drained through an upper part of the flood-resistant barrier 2 with a drainage pump, as needed.

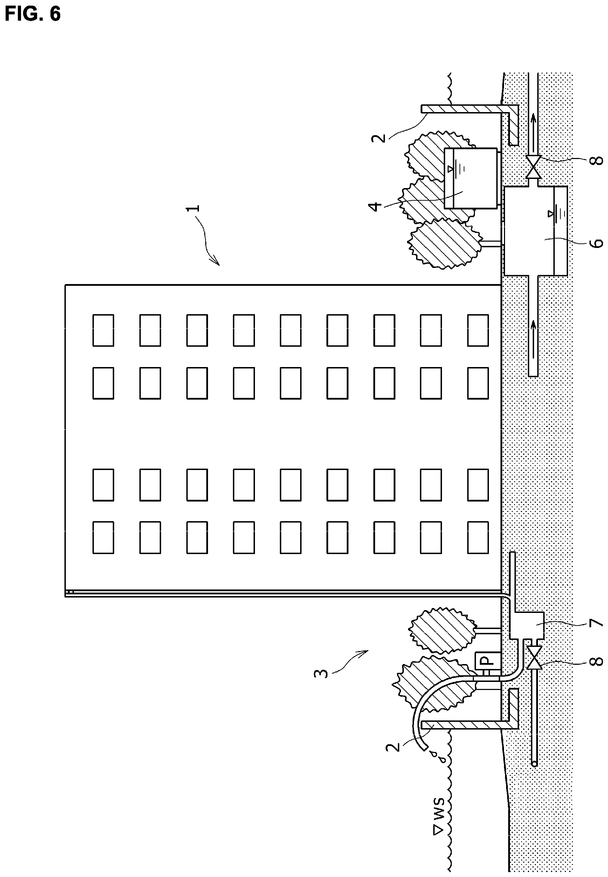

FIG. 6 conceptionally shows another embodiment of the flood-resistant facility equipped with the flood-resistant barrier. This embodiment is similar to the embodiment shown in FIG. 1 in relation between the building 1 and the flood-resistant barrier 2 surrounding the periphery of the building and also in configuration in which the openings are closed off by the opening sealing means so that the isolated tranquil space 3 is formed inside the flood-resistant barrier 2 when the risk of flooding due to floods and/or storm surges arises.

Conventionally, the hospitals or like buildings have been provided with an emergency-use power supply beforehand for long-term blackouts or with some equipment supposed to be applied to vertical refuge during flood disasters, in which case, however, various troubles and/or damages would be expected to occur under the circumstances that a floodwater reaches the second floor of the building, because of the fact that intrusion of water into the building 1 is prevented by taking only a measure to close off the entrance and exit.

Meanwhile, the present invention is to make it possible to form the isolated tranquil space 3 inside the flood-resistant barrier 2 even when the risk of flooding due to floods or storm surges arises, thus enabling damages to the building 1 itself to be kept to a minimum.

The embodiment shown in FIG. 6 takes a configuration in which the emergency-use water receiving tank 4 is installed on the ground in the site, and the emergency-use septic tank 6 is installed under the ground, together with the rainwater storage tank 7 for coping with heavy rainfall, when utilization of the rooftop of the building is restricted due to the existence of a heliport or the like on the rooftop, for instance, on the assumption that the equipment such as an emergency-use power supply has been installed beforehand.

For the sections configured to be the entrance and exit for use at normal times such as section connected to the entrance hall, section connected to the parking place and section used as the disposal place for the residential wastes and others, the openings are naturally needed. To cope with this situation, these openings are closed off to allow the isolated space 3 to be formed inside the flood-resistant barrier 2 when the risk of flooding due to floods or storm surges arises.

FIGS. 7 and 8 respectively show one embodiment of the opening sealing means for closing off the openings, wherein FIG. 7 is a horizontal cross-section view, and FIG. 8 is a vertical cross-sectional view corresponding to FIG. 7.

Referring to this embodiment, there is shown one configuration in which water cutoff walls 10A, 10B formed of water cutoff panels 12 are formed in a double wall arrangement between two supports 11 disposed with a gap. FIGS. 7 and 8 respectively show one installation of the opening sealing means in the opening section of the flood-resistant barrier 2.

According to this embodiment, the supports 11 are respectively provided with two vertically- extending guide grooves 12a, 12b, and the reinforced plastic of metal plate-made water cutoff panels 12 normally kept in a storage place are vertically disposed in three stages such that both ends of each water cutoff panel 12 are respectively fitted from above into the guide grooves 12a, 12b of the supports 11 facing each other. A commonly-available water cutoff material is interposed in the portions of the g guide grooves 12a, 12b and/or between the water cutoff panels 12 to minimize water leakage from clearances.

It is to be herein noted that the present invention is not aimed at expecting any complete water cutoff performance with the individual water cutoff walls disposed in a multiplex wall arrangement, but is to control the water level between the water cutoff walls 10A, 10B in the double wall arrangement so as to be lower than the water level in an outer area by draining the infiltrating water to the outside with the drainage means such as the drainage pump 14, on the assumption that infiltration of water from the outside occurs.

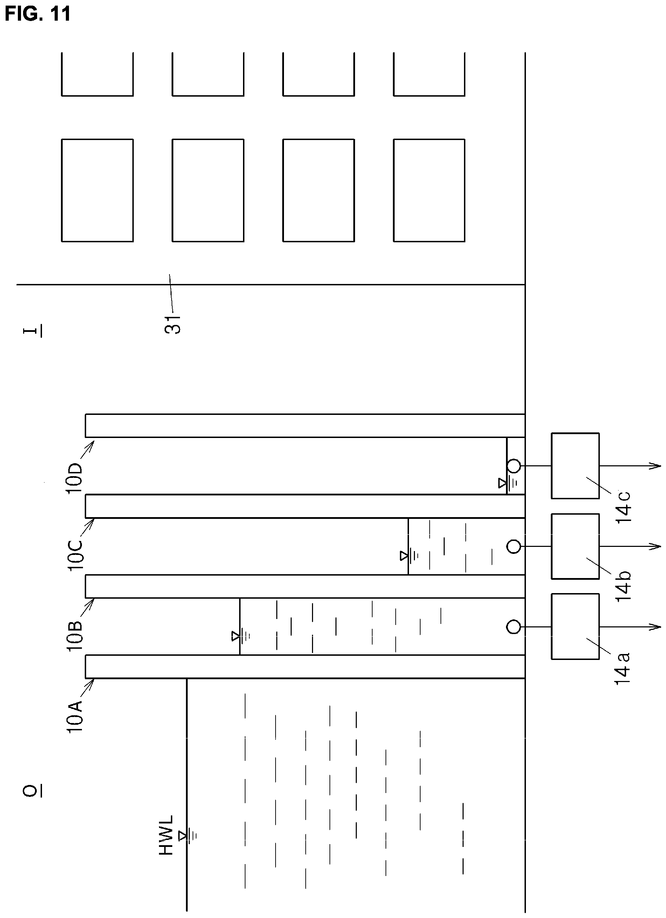

The water level between the water cutoff walls 10A, 10B in the double wall arrangement is controlled lower so that the water pressure applied to the water cutoff wall 1B on the interior side is relatively lessened, thus enabling an amount of water infiltrating into the interior of the second water cutoff wall 10B to be controlled lower. In principle, it is considered that installation of more water cutoff walls such as the third and the fourth water cutoff walls on the interior side of the water cutoff walls in the double wall arrangement as shown in FIG. 11 described below enables infiltration of water into the interior of the multiplex water cutoff wall to be further controlled, in which case, however, the water cutoff walls in the double or triple wall arrangement may be enough in usual conditions.

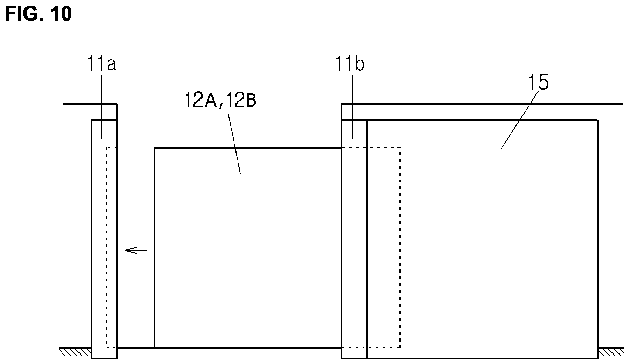

FIG. 9 is a horizontal cross-sectional view showing another embodiment of the multiplex water cutoff wall according to the present invention, and FIG. 10 is a vertical cross-sectional view corresponding to FIG. 9.

Referring to this embodiment, openable-type water cutoff walls 10A, 10B formed of water cutoff panels 12A, 12B are formed in the double wall arrangement between two supports 11a, 11b disposed with a gap.

According to this embodiment, a side face of one support 11b is provided with a door pocket-shaped housing part 15 for housing the water cutoff panels 12A, 12B, wherein the water cutoff panels 12A, 12B housed in the housing part 15 are made to slide toward the other support 11a so as to close off the opening when the occurrence of flooding would be expected.

This embodiment is similar to the embodiment shown in FIGS.7 and 8 in the principle of water cutoff operation by the water cutoff walls in the double or multiplex wall arrangement, together with the drainage means such as the drainage pump.

FIG. 11 shows the multiplex water cutoff wall in principle, wherein the multiplex water cutoff wall is constituted of a plurality of water cutoff walls (or water cutoff walls 10A, 10B, 10C and 10D) disposed in the multiplex wall arrangement with a gap in the wall thickness direction, and the drainage means (or the drainage pumps 14a, 14b and 14c) for draining water having infiltrated between the water cutoff walls to the outside.

Provided that the outermost water cutoff wall 10A exhibits complete water cutoff performance when a rise in water level occurs in an area O outside the multiplex water cutoff wall during flooding, no infiltration of water into an area I inside the multiplex water cutoff wall would be caused, in which case, however, it is difficult to secure the complete water cutoff performance in actuality, and besides, much cost is incurred. For that reason, the water cutoff walls shall be designed on the assumption that the complete water cutoff performance is not to be achieved.

The drainage pump 14a for draining the infiltrating water is installed between the water cutoff walls 10A, 10B to drain the infiltrating water to the outside of the multiplex water cutoff wall, thereby enabling the water level between the water cutoff walls 10A, 10B to be kept lower than the water level in the area O outside the water cutoff wall 10A.

When the water cutoff walls in the double wall arrangement are not enough, the number of water cutoff walls to be disposed in the multiplex wall arrangement is increased so as to dispose the third water cutoff wall 10C and the fourth water cutoff wall 10D, wherein the water infiltrating between the respective water cutoff walls is drained with the drainage pumps 14b 14c. By so doing, the infiltrating water level is lowered nearer the interior, and as a result, infiltration of water into the interior of the multiplex water cutoff wall is controlled, thereby preventing flood damages to the building and the like in the interior section protected by the multiplex water cutoff wall.

### EXPLANATION OF REFERENCE NUMERALS

1 ... Building, 1a ... Multiple dwelling housing, 1b ... Office building, 1c ... Hospital, 1d ... Storehouse, 1W ... Water-resistant wall, 2 ... Flood-resistant barrier, 2a ... Embedded part, 3 ... Space, 4 ... Water receiving tank, 5 ... Emergency-use generator, 6 ... Septic tank, 7 ... Rainwater storage tank, 8 ... Check valve, 9 ... Opening, E ... Embankment, Eₜ ... Embankment of transition section, T ... Transition section, p ... Planting, s ... Store, 10, 10A, 10B, 10C, 10D ... Water cutoff wall, 11, 11a, 11b ... Support, 12a, 12b ... Guide groove, 12, 12A, 12B ... Water cutoff panel, 14, 14a, 14b, 14c ... Drainage pump, 15 ... Housing part, 31 ... Main route, 32 ... Detour route

## Claims

1. A flood-resistant facility equipped with a flood-resistant barrier, **characterized in that** in the periphery of one or more buildings, a flood-resistant barrier made to be watertight is constructed so as to surround nearly the entire periphery of said buildings except openings configured to be an entrance and exit for use at normal times, said flood-resistant barrier being configured so as to have an upper end part that is at least equal in height to an estimated flood depth in an application target region, as well as to have durability enough to be resistant to the water pressure of floodwater of at least said estimated flood depth, and the opening sections of said flood-resistant barrier are provided with an opening sealing means for water-tightly closing off the openings in the opening sections during flooding,
wherein an embankment of at least a predetermined height is created in an area surrounded by said flood-resistant barrier, and the height of the upper end part of the flood-resistant barrier constructed on said embankment is set to be least equal to the estimated flood depth in the target region,
wherein in a predetermined area outside said flood-resistant barrier, a sloping embankment part is created as a transition section which gradually increases in height from the surface of a point or source or origin toward the flood-resistant barrier, and
wherein a portion of the wall of at least one or more of said buildings is made to protrude to outside of an area surrounded by said flood-resistant barrier, and the wall surface of the protruding section up to the outside of the area surrounded by said flood-resistant barrier is configured to be a water-resistant wall which has watertightness and is continuous with said flood-resistant barrier.

2. The flood-resistant facility equipped with the flood-resistant barrier according to claim 1, wherein said embankment is 0.5 to 3.0m in height.

3. The flood-resistant facility equipped with the flood-resistant barrier according to claim 1 or 2, wherein said opening sealing means includes a multiplex water cutoff wall having a plurality of water cutoff walls disposed in a double or at least triple wall arrangement with a gap in the wall thickness direction and a drainage means for draining water having infiltrated between said water cutoff walls to the outside.

4. The flood-resistant facility equipped with the flood-resistant barrier according to claim 1 or 2, wherein planting is applied to the partial or nearly entire area of said transition section.

5. The flood-resistant facility equipped with the flood-resistant barrier according to claim 1, wherein wave dissipating blocks or wave dissipating structures are installed in the partial or nearly entire periphery of said flood-resistant barrier.
